# EUROPÄISCHE PATENTANMELDUNG

(11) **EP 4 763 717 A1**
(43) Veröffentlichungstag der Anmeldung: **24.06.2026**
(21) Anmeldenummer: 24222994.6
(22) Anmeldetag: 23.12.2024
(51) Int. Cl.: B65B 7/06, B29C 65/00, B65B 43/46, B65B 51/14, B65B 3/00, B65B 29/00, B65B 43/54

(54) **VERFAHREN UND AUSRICHTSTATION ZUM KOPFSEITIGEN AUSRICHTEN BEFÜLLTER STANDBODENBEUTEL**

(71) Anmelder: Capri Sun AG, 6300 Zug (CH)
(72) Erfinder: Pohlmann, Laila, 45701 Herten (DE)
(74) Vertreter: Grünecker Patent- und Rechtsanwälte PartG mbB

(57) **Zusammenfassung**

Beschrieben wird ein Verfahren und eine Ausrichtstation zum Ausrichten von an Standbodenbeuteln ausgebildeten Kopfbereichen für deren anschließende Versiegelung mittels Schweißnaht. Die mit Produkt gefüllten und kopfseitig offenen Standbodenbeutel werden zu transporttechnisch stationären Greifern taktweise gefördert, welche seitliche Randabschnitte des jeweiligen Kopfbereichs greifen und so voneinander wegziehen, dass die Vorder- und Rückseiten der Kopfbereiche aufeinander zubewegt werden. Ferner werden anschließend die Vorder- und Rückseiten mittels mindestens einer mit den Standbodenbeuteln jeweils mitlaufenden beweglichen Fixierleiste für den Weitertransport zur Versiegelung fixiert. Dadurch lassen sich im Anschluss auch besonders flexible Beutelmaterialien mit geringer Steifigkeit qualitativ hochwertig versiegeln.

## Beschreibung

Die Erfindung betrifft ein Verfahren und eine Ausrichtstation jeweils zum Ausrichten von an befüllten Standbodenbeuteln ausgebildeten Kopfbereichen.

Bekanntermaßen können flexible Standbodenbeutel für flüssige Produkte, wie beispielsweise Getränke, aus einem mehrschichtigen Folienverbund hergestellt und nach ihrer Befüllung durch eine beim Transport mitlaufende Schließleiste im Kopfbereich geschlossen werden. Dabei wirkt eine Druckkraft von außen auf die Vorder- und Rückseite des Beutels und drückt diese dadurch flach aneinander. Anschließend kann eine faltenfreie Kopfsiegelnaht mit gängigen Folien-Schweißverfahren hergestellt werden. Hierfür ist eine gewisse Steifigkeit des Folienmaterials insbesondere im Kopfbereich erforderlich, was beispielsweise durch eine versteifende Lage aus Aluminium erzielt werden kann.

Aus Gründen des Umweltschutzes sowie möglicher zukünftiger Entwicklungen entsprechender umweltrechtlicher Regelungen ist es jedoch zunehmend angebracht, auf Aluminium im Materialverbund weitgehend zu verzichten. Aufgrund der insbesondere bei Heiß-Abfüllung dann geringeren Steifigkeit der Beutel im Kopfbereich können deren Vorder- und Rückseiten von Schließleisten nicht mehr zuverlässig in obiger Weise aneinandergedrückt werden, sodass eine faltenfreie Kopfsiegelnaht nicht mehr prozesssicher hergestellt werden kann.

Es besteht daher demgegenüber Verbesserungsbedarf.

Die gestellte Aufgabe wird durch ein Verfahren und eine Ausrichtstation gemäß den unabhängigen Ansprüchen gelöst. Vorteilhafte Ausführungsformen sind u.a. in den abhängigen Ansprüchen angegeben.

Das beschriebene Verfahren dient demnach zum Ausrichten von an Standbodenbeuteln ausgebildeten Kopfbereichen für deren anschließende Versiegelung mittels Schweißnaht. Die mit Produkt gefüllten und kopfseitig offenen Standbodenbeutel werden hierfür zu transporttechnisch stationären Greifern taktweise gefördert. Diese greifen seitliche Randabschnitte des jeweiligen Kopfbereichs und ziehen sie so voneinander weg, dass die Vorder- und Rückseiten der Kopfbereiche dabei aufeinander zubewegt werden. Anschließend werden die so ausgerichteten Vorder- und/oder Rückseiten jeweils mit mindestens einer mit den Standbodenbeuteln jeweils mitlaufenden und diesbezüglich gesteuert beweglichen Fixierleiste für den Weitertransport zur Versiegelung fixiert bzw. formstabilisiert.

Anders gesagt ziehen die Greifer die seitlichen Randabschnitte des jeweiligen Kopfbereichs so voneinander weg, dass eine von den oberen Rändern der Vorder- und Rückseite gebildete Befüllöffnung dabei zugezogen wird.

Hierbei können die Vorder- und Rückseiten der Kopfbereiche so weit aufeinander zubewegt werden, dass ihre oberen Ränder schließlich zumindest abschnittsweise und insbesondere im Wesentlichen auf ganzer Länge aneinander anliegen.

Danach wird diese Ausrichtung fixiert bzw. stabilisiert, indem wenigstens eine auf den jeweiligen Standbodenbeutel zu bewegliche und insbesondere schwenkbare Fixierleiste (ggf. mit einem geeigneten Gegenlager) die Vorder- und/oder Rückseite abstützt oder einklemmt.

Eine einzelne derart bewegliche Fixierleiste stützt oder klemmt den jeweils zugeordneten Beutel bzw. die Beutel einer zugeordneten Querreihe von Beuteln vorzugsweise aktiv von vorne oder hinten im Zusammenspiel mit einer dann jeweils auf der entgegengesetzten Seite des bzw. der Beutel angeordneten starren Stützstruktur. Paarweise aufeinander zu bewegliche und insbesondere schwenkbare Fixierleisten können den Beutel bzw. die Beutel einer Querreihe dagegen aktiv von vorne und hinten abstützen oder klemmen.

Einzelne auf die Beutel zu bewegliche Fixierleisten oder Paare solcher Fixierleisten können jeweils mehreren Förderspuren (Verarbeitungsspuren) bzw. einer sich darüber erstreckenden Querreihe von Standbodenbeuteln zugeordnet sein, beispielsweise 6 bis 24 Förderspuren.

Die Fixierleiste trägt zum Schließen der Befüllöffnung nicht bei, sondern hält den jeweils von den Greifern zuvor ausgerichteten Kopfbereich nur in Form, insbesondere in einem derart geschlossenen Zustand, das die Vorder- und Rückseite aneinander anliegen.

Die Befüllöffnung wird somit nicht mehr durch eine Schließleiste mit einer von außen auf die Vorder- und Rückseite wirkenden Druckkraft geschlossen, sondern durch eine orthogonal dazu gerichtete Zugkraft. Die Steifigkeit der verwendeten Folie ist weniger prozessrelevant, da sie die die Kraft für die Ausrichtung der Vorder- und Rückseite zueinander nicht mehr nach außen in die seitlichen Randbereiche einer Seitensiegelung ableiten muss. Demzufolge ist die anschließende Schweißnaht-Versiegelung der Befüllöffnung auch bei Folien mit geringer Steifigkeit zuverlässig faltenfrei möglich.

Vorzugsweise werden an den Greifern vorhandene Greiferfinger in einer senkrechten und zur Transportrichtung des Transportmittels parallelen Ebene mittels eines am Greifer individuell ausgebildeten motorischen Antriebs bewegt. Dies ermöglicht eine platzsparende und präzise Betätigung der Greifer zum Schließen und Öffnen, ebenso eine Anpassung der Schließkraft an das jeweilige Folienmaterial.

Die Greiferfinger greifen vorzugsweise von oben, insbesondere senkrecht von oben, und wechseln dann vorzugsweise taktweise zwischen einer geöffneten Stellung, in der die Standbodenbeutel unterhalb der Greifer passieren können, und einer geschlossenen Stellung, in der sie die Kopfbereiche greifen. Die Greifer können dann auf konstruktiv einfache Weise in einer im Produktionsbetrieb vertikal stationären Lage betrieben werden.

In ihrer offenen Stellung beträgt der Öffnungswinkel des jeweiligen Greifers, also ein von seinen einander gegenüberliegenden Greiferfingern eingeschlossener Gesamt-Öffnungswinkel, beispielsweise wenigstens 90°, vorzugsweise wenigstens 150° (gegenüber geschlossener Stellung bei 0°). Derartige Öffnungswinkel ermöglichen nicht nur einen einfachen Transport der Beutel unterhalb der geöffneten Greifer, sondern vereinfachen auch das Greifen der vom eingefüllten Produkt offen gehaltenen Kopfbereiche, deren Öffnungsform und Positionierung aufgrund des flexiblen Beutelmaterials variieren kann.

Alternativ (zu sich von oben derart weit öffnenden und ansonsten vertikal stationären Greifern) wäre es prinzipiell auch denkbar, die Greifer in geöffneter Stellung von oben auf die zugeordneten Kopfbereiche der Beutel taktweise abzusenken. Die Greifer könnten sich dann von oben her und/oder seitlich von außen zu den Beutel hin öffnen, also beispielsweise auch schräg von oben/außen. Die Ausrichtstation umfasst dann einen Hubmechanismus zum vorzugsweise gemeinsamen Heben und Senken aller vorhandenen Greifer.

Die Greifer werden zum paarweisen Auseinander-/ Zusammenbewegen vorzugsweise quer zur Transportrichtung des Transportmittels verschoben. Dies ermöglicht ein effizientes Zuziehen der beim Transport üblicherweise quer ausgerichteten Standbodenbeutel.

Die Standbodenbeutel können in mehreren Verarbeitungs-/ Förderspuren unter ein jeweils zugeordnetes Paar der Greifer gefördert werden, wobei vorzugsweise nach deren Schließen die bezüglich der Förderspuren linken Greifer mechanisch aneinandergekoppelt und die bezüglich der Förderspuren rechten Greifer mechanisch aneinandergekoppelt jeweils gruppenweise verschoben werden. Jede Gruppe kann dann effizient von einem einzigen zugeordneten Antrieb, bspw. einem Servomotor, verschoben werden. Mittels eines zusätzlichen Getriebes könnten auch beide Gruppen von einem einzigen Antrieb verschoben werden.

Beispielsweise sind 6 bis 24 Förderspuren nebeneinander verlaufend angeordnet.

Besonders vorteilhaft ist es, nach dem Schließen der Greifer die bezüglich der Förderspuren linken Greifer mechanisch aneinandergekoppelt und die bezüglich der Förderspuren rechten Greifer mechanisch aneinandergekoppelt jeweils gruppenweise zu verschieben.

Vorzugsweise werden die Vorder- und Rückseiten der Kopfbereiche unterhalb der auseinandergezogenen Greifer von mindestens zwei aufeinander zu beweglichen Fixierleisten bis zur anschließenden Versiegelung abgestützt und/oder zusammengedrückt.

Die mit den Beuteln mitlaufenden Fixierleisten könnten beispielsweise mittels wenigstens einer stationären Steuerkurve oder einem stationären Aktor in der Peripherie des Förderers nach Auseinanderfahren der Greifer auf prinzipiell bekannte Weise betätigt werden. Somit lassen sich die Kopfbereiche relativ einfach und ausreichend formstabilisierend zum nachfolgenden Verschweißen weitertransportieren.

Die Standbodenbeutel bestehen beispielsweise aus mehrlagigen Kunststofffolien, insbesondere im Wesentlichen nur aus PP oder PE. Darunter kann verstanden werden, dass die Kunststofffolien keine versteifende Aluminiumlage umfassen, wohingegen Aluminium-Bedampfung oder Hilfs-Kunststoffe zum Herstellen von Gasbarrieren oder zum Kleben denkbar wären.

Die Standbodenbeutel werden der beschriebenen Ausrichtung insbesondere nach einer Heiß-Abfüllung zugeführt. Das heißt, das in die Beutel unmittelbar zuvor eingefüllte Produkt hat im Wesentlichen noch eine für die Heiß-Abfüllung von Getränken, wie Säften oder dergleichen, geeignete Temperatur. Diese erhöhte Temperatur reduziert die Steifigkeit thermoplastischer Beutelmaterialien, wie beispielsweise PE oder PP, sodass das beschrieben Verfahren stromabwärts einer Heiß-Abfüllung besonders vorteilhaft eingesetzt werden kann. Allerdings ist das beschriebene Verfahren auch nach einer Kalt-Abfüllung vorteilhaft, da das eingefüllte Produkt in jedem Fall auf den Beutelboden drückt und daher ansonsten den Kopfbereich verformen und eine ordnungsgemäße Versiegelung behindern würde.

Vorteilhaft ist zudem ein Verfahren zum Versiegeln mit Produkt gefüllter Standbodenbeutel, wobei das Produkt insbesondere infolge einer Heiß-Abfüllung noch erhitzt ist, und wobei kopfseitige Befüllöffnungen der Standbodenbeutel mit dem Ausrichtverfahren gemäß wenigstens einer der beschriebenen Ausführungsformen zugezogen und dann in so fixierter Ausrichtung nach taktweisem Weitertransport mittels Folien-Schweißnaht abdichtend versiegelt werden.

Die beschriebene Ausrichtstation dient zum Ausrichten von an gefüllten Standbodenbeuteln ausgebildeten Kopfbereichen für deren anschließende Versiegelung mittels Schweißnaht, umfassend: ein Transportmittel zum taktweisen Transportieren der gefüllten Standbodenbeutel; oberhalb der Standbodenbeutel transporttechnisch stationär angeordnete Greifer; und mindestens eine mit den Standbodenbeuteln jeweils mitlaufende Fixierleiste, wobei die Greifer derart angeordnet und automatisch gesteuert sind, dass sie seitliche Randabschnitte des jeweiligen Kopfbereichs greifen und voneinander wegziehen und dadurch die Vorder- und Rückseiten der Kopfbereiche aufeinander zubewegen können, und wobei die jeweilige Fixierleiste derart beweglich angeordnet und automatisch gesteuert ist, dass sie die zuvor aufeinander zubewegten Vorder- und /oder Rückseiten für den Weitertransport zur Versiegelung fixieren kann.

Die einzelnen Greifer können zum Schließen bzw. Greifen jeweils in einer senkrechten und zur Transportrichtung des Transportmittels parallelen Ebene bewegliche Greiferfinger und einen motorischen Antrieb zum Betätigen der Greiferfinger aufweisen.

Die Greiferfinger sind dann vorzugsweise so angeordnet und automatisch gesteuert, dass sie von oben her greifen und zwischen einer geöffneten Stellung, in der die Standbodenbeutel unterhalb der Greifer passieren können, und einer geschlossenen Stellung, in der sie die Kopfbereiche greifen, taktweise wechseln.

Vorzugsweise sind die Greifer zum paarweisen Auseinander-/ Zusammenbewegen quer zur Transportrichtung des Transportmittels verschiebbar angeordnet.

Die Ausrichtstation kann eine Vielzahl von Greifern umfassen, die nebeneinander verlaufenden, insbesondere 6 bis 24 Förderspuren für die Standbodenbeutel jeweils paarweise zugeordnet sind, wobei dann vorzugsweise alle bezüglich der jeweiligen Förderspur linken Greifer mittels einer ersten quer verlaufenden Verbindungsstruktur und alle diesbezüglich rechten Greifer mittels einer zweiten quer verlaufenden Verbindungsstruktur gemeinsam verschoben werden. Die jeweilige Verbindungsstruktur kann ein Querträger, ein Schlitten oder dergleichen sein.

Der Förderer kann den Standbodenbeuteln jeweils paarweise voraus- und nachlaufende Fixierleisten umfassen, die derart beweglich angeordnet und gesteuert sind, dass sie die Vorder- und Rückseiten der Kopfbereiche unterhalb der paarweise auseinandergefahrenen Greifer insbesondere bis zur anschließenden Versiegelung abstützen und/oder zusammendrücken.

Vorteilhaft ist zudem eine Abfüllanlage für Standbodenbeutel, mit: einer Füllstation zum Befüllen, insbesondere Heiß-Befüllen, der Standbodenbeutel mit einem flüssigen Produkt; stromabwärts davon die Ausrichtstation gemäß wenigstens einer der beschriebenen Ausführungsformen; wiederum stromabwärts davon eine Versiegelungsstation zum Herstellen von Kopfsiegelnähten oberhalb der Fixierleisten mittels Folienschweißen; und wenigstens einem sich dazwischen erstreckenden und taktweise angetriebenen Förderer mit Stützgerüsten zur stehenden Aufnahme je eines Standbodenbeutels.

Eine bevorzugte Ausführungsform der Erfindung ist zeichnerisch dargestellt. Es zeigen:
- Fig. 1: eine schematische Vorderansicht auf eine Behandlungsspur der Ausrichtstation;
- Fig. 2: eine schematische Seitenansicht der Ausrichtstation; und
- Fig. 3: eine schematische Darstellung einer Abfüllanlage mit der Ausrichtstation.

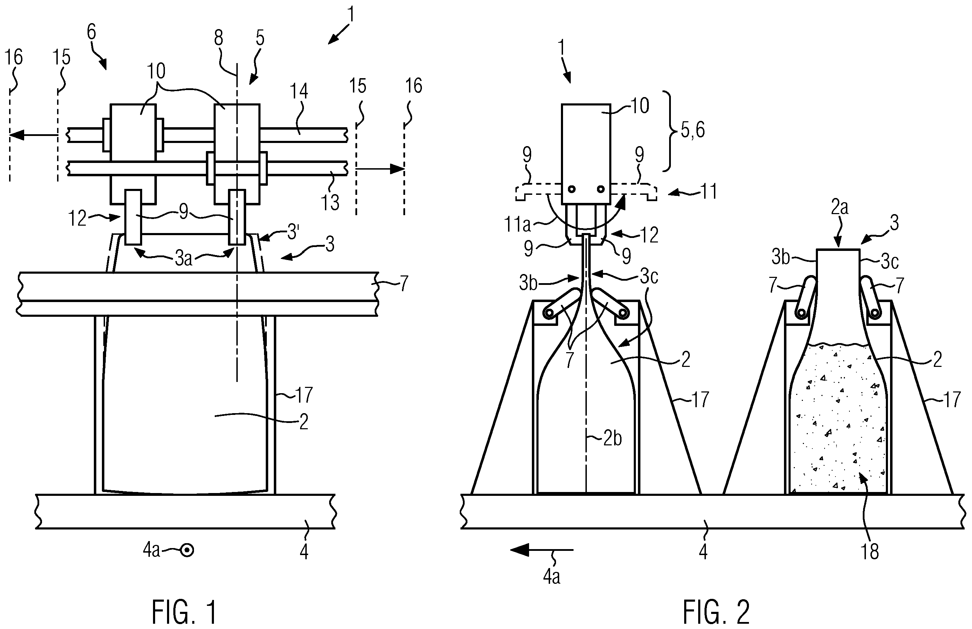

Wie die Fig. 1 und 2 in der Zusammenschau erkennen lassen, umfasst die Ausrichtstation 1 zum Ausrichten von an flexiblen Standbodenbeuteln 2 (nachfolgend auch nur Beutel 2 genannt) ausgebildeten Kopfbereichen 3 für deren anschließende Versiegelung mittels Schweißnaht: wenigstens einen beispielsweise band- oder kettenförmigen Förderer 4 zum schrittweisen Fördern der stromaufwärts befüllten Standbodenbeutel 2 in einem vorgegebenen Arbeitstakt; oberhalb der so geförderten Standbodenbeutel 2 fördertechnisch stationär angeordnete und (in Förderrichtung 4a gesehen) linke Greifer 5 und rechte Greifer 6; und mit den Beuteln 2 beim Fördern mitlaufende Fixierleisten 7.

Die Greifer 5, 6 sind quer zur Förderrichtung 4a verschiebbar angeordnet und elektronisch gesteuert, sodass sie jeweils zugeordnete seitliche Randabschnitte 3a des jeweiligen Kopfbereichs 3 paarweise greifen und voneinander wegziehen und dadurch die zugehörige Vorderseite 3b und Rückseite 3c der Kopfbereiche 3 aufeinander zubewegen. Dadurch wird eine kopfseitige Befüllöffnung 2a der Standbodenbeutel 2 im Wesentlichen zugezogen. In der Fig. 1 ist der auseinandergezogene Zustand des Kopfbereichs 3 schematisch durch einen gestrichelten Umriss 3' angedeutet.

Die Fig. 2 zeigt im Bereich der Ausrichtstation 1 ein Standbodenbeutel 3 mit der in einem zugeordneten Arbeitstakt bereits zugezogenen Befüllöffnung (dort ohne Bezugszeichen) und dahinter einen Standbodenbeutel 3 mit der von der vorangegangenen Produktabfüllung noch offenstehenden Befüllöffnung 2a, die dann im nächsten Arbeitstakt entsprechend zugezogen wird.

Die Greifer 5, 6 weisen jeweils in einer vertikalen und zur Förderrichtung 4a parallelen Ebene 8 schwenkbare Greiferfinger 9 und individuelle Antriebe 10 zum (hier paarweisen) Schließen/ Öffnen der Greiferfinger 9 auf. Dabei kann es sich beispielsweise um Servomotoren handeln.

In vollständig geöffneter Stellung 11 (zur Unterscheidung gestrichelt dargestellt) der Greifer 5, 6 können die Beutel 2 kollisionsfrei unter den Greiferfingern 9 passieren. In vollständig geschlossener Stellung 12 drücken die Greiffinger 9 die Vorderseite 3b und Rückseite 3c in den seitlichen Randbereichen 3a, die beispielsweise Seitensiegelungen 2b umfassen, kraftschlüssig zusammen.

Die Greiferfinger 9 lassen sich gegenüber der geschlossenen Stellung 12 beispielsweise um einen Gesamt-Öffnungswinkel 11a von wenigstens 90° und insbesondere wenigstens 150° in die offene Stellung 11 schwenken, um die Beutel 2 darunter kollisionsfrei zu fördern. Besonders vorteilhaft sind Öffnungswinkel der Greifer 5, 6, also Gesamt-Öffnungswinkel 11a zwischen den Greiferfingern 9, im Bereich von 150 bis 180° (entsprechend Öffnungswinkeln von 75 bis 90° der einzelnen Greiffinger 9 bezüglich ihrer geschlossenen Stellung 12 bzw. einer Mittelachse der Greifer 5, 6).

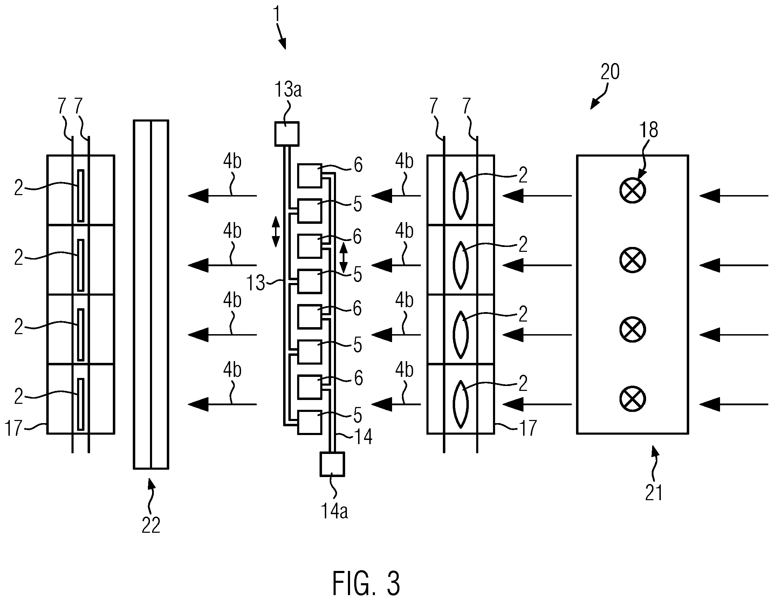

Die Ausrichtstation 1 umfasst vorzugsweise eine Vielzahl von nebeneinander verlaufenden Behandlungsspuren bzw. Förderspuren 4b (siehe Fig. 3) für die Standbodenbeutel 2, wovon in der Fig. 1 und 2 nur eine Spur stellvertretend dargestellt ist. Es ist dann vorteilhaft, alle diesbezüglich jeweils linken Greifer 5 gemeinsam durch eine erste quer zur Förderrichtung 4a verlaufende Verbindungsstruktur 13 und alle rechten Greifer 6 gemeinsam durch eine entsprechende zweite Verbindungsstruktur 14 antriebtechnisch zu koppeln und demzufolge beim Auseinanderziehen der seitlichen Randbereiche 3a gruppenweise gemeinsam zu verschieben (siehe nichtmaßstäbliche Pfeile zwischen 15 und 16 in der Fig. 1). Die Verbindungsstrukturen 13, 14 (in der Fig. 2 der Übersichtlichkeit halber weggelassen) können Träger, Schlitten oder anderweitige, ggf. geeignet gekoppelte Transportelemente sein oder umfassen.

Lediglich beispielhaft sind hier zum besseren Verständnis vier Förderspuren 4b dargestellt. Je nach geforderter Produktionsleistung könnten stattdessen beispielsweise 6 bis 24, insbesondere 8 bis 20 Förderspuren 4b nebeneinander vorhanden sein bzw. gleichzeitig verwendet werden.

Den Verbindungselementen 13, 14 können separate motorische Stellantriebe 13a, 14a (Fig. 3) oder ein gemeinsamer Stellantrieb mit Getriebe (nicht dargestellt) zugeordnet sein. Dabei kann es sich beispielsweise um Servomotoren handeln.

Die Greifer 5, 6 werden in jedem Fall taktweise mit dem Förderer 4 synchronisiert zwischen einer paarweise zusammengefahrenen Ausgangsstellung 15 und einer paarweise auseinandergefahrenen Endstellung 16 (Zuziehstellung) elektronisch gesteuert hin- und her bewegt. In der Ausgangsstellung 15 werden die Greifer 5, 6 auf den seitlichen Endbereichen 3a kraftschlüssig geschlossen und dann in die Endstellung 16 quer verschoben. Nach der Ausrichtung des Kopfbereichs 3 und dessen Fixierung mit den Fixierleisten 7 werden die Greifer 5, 6 wieder geöffnet und für den nächsten Arbeitstakt in die Ausgangsstellung 15 zurückgefahren.

Analog dazu wäre es prinzipiell denkbar, alle Greifer 5, 6 geöffnet auf die darunter positionierten Beutel 2 taktweise abzusenken, zu schließen und nach paarweisem Auseinanderfahren der Greifer 5, 6 und anschließender Beutelfixierung mit den Fixierleisten 7 wieder zu öffnen und so weit anzuheben, dass die Beutel 2 darunter passieren können. Die Ausrichtstation 1 könnte hierfür wenigstens einen Hubmechanismus (nicht dargestellt) umfassen, mit dem sich die Greifer 5, 6 entsprechend gemeinsam absenken bzw. anheben lassen. Die Greifer 5, 6 könnten die Randabschnitte 3a dann auch seitlich von außen greifen (nicht dargestellt).

Die Fixierleisten 7 sind in Förderrichtung 4a schwenkbar oder ggf. verschiebbar angeordnet und gesteuert, sodass sie die zuvor mittels der Greifer 5, 6 aufeinander zubewegten Vorder- und Rückseiten 3b, 3c für den Weitertransport zur Versiegelung durch seitliches Abstützen und/oder Klemmen auf (eine je nach Beutelmaterial) geeignete Weise zueinander fixieren. Die Fixierleisten 7 erstrecken sich dann quer vorzugsweise über alle vorhandenen Förderspuren 4b.

Die Fixierleisten 7 laufen gemeinsam mit Stützgerüsten 17 und den davon aufgenommenen Standbodenbeuteln 2 auf dem Förderer 4. Der mechanische Aufbau und Antrieb der Fixierleisten 7 kann jeweils prinzipiell demjenigen von bekannten Schließleisten entsprechen, ihre Steuerung erfolgt allerdings im obigen Sinne nur zur Fixierung der zuvor ausgerichteten Vorder- und Rückseiten 3b, 3c, nicht um diese zusammenzubewegen bzw. die Befüllöffnung 2a zu schließen.

Prinzipiell wäre die beschriebe Fixierung auch mit nur einer beweglichen Fixierleiste 7 denkbar, die dann beispielsweise mit einer starr mitlaufenden Leiste (nicht dargestellt) zusammenwirken könnte. Allerdings wird die Handhabung der Standbodenbeutel 2 stromaufwärts durch zwei zueinander bewegliche (und dort noch geöffnete) Fixierleisten 7 erleichtert.

Die fördertechnisch stationären Greifer 5, 6 greifen die mit einem flüssigen und insbesondere aufgrund der vorangegangenen Abfüllung noch heißen Produkt 18, beispielsweise einem Getränk, gefüllten Standbodenbeutel 2 im Wesentlichen an ihren Seitensiegelungen 2b, die in den seitlichen Randabschnitten 3a des Kopfbereichs 3 enden.

Vorteilhaft ist hierbei auch der Umstand, dass die Greifer 5, 6 stationär und damit permanent an der Ausrichtstation 1 angeordnet sind und im Gegensatz zu den Fixierleisten 7 somit nicht in großer Stückzahl an jeder einzelnen Beutelaufnahme, also hier den Stützgerüsten 17, benötigt werden.

Wie die Fig. 3 erkennen lässt, ist die Ausrichtstation 1 Bestandteil einer Abfüllanlage 20, zu der wenigstens noch eine Befüllstation 21 stromaufwärts und eine Versiegelungsstation 22 stromabwärts gehört. In der Befüllstation 21 wird das flüssige Produkt 18, beispielsweise ein Getränk, auf prinzipiell bekannte Weise in die Standbodenbeutel 2 gefüllt. Insbesondere handelt es sich dabei um eine Heiß-Abfüllung, obwohl das beschriebene Verfahren und die Ausrichtstation 1 auch nach einer Kalt-Abfüllung vorteilhaft möglich sind. In der Versiegelungsstation 22 werden die oberen Ränder der Standbodenbeutel 2, also deren zuvor zugezogene Kopfbereiche 3a, durch Folienschweißen abdichtend versiegelt. Hierfür können jeweils bekannte Vorrichtungen und Verfahren eingesetzt werden, sodass darauf hier nicht weiter eingegangen wird.

Die Abfüllanlage 20 und die von ihr umfasste Ausrichtstation 1 arbeiten in einem Arbeitstakt, in dem sich Förderung und Verarbeitung der Standbodenbeutel 2 auf prinzipiell bekannte Weise schrittweise abwechseln. Hierfür können programmierbare elektronische Steuervorrichtungen bekannter Bauformen vorhanden sein, um beispielsweise die jeweiligen Antriebe für den Förderer 4 und zum Öffnen/ Schließen sowie zum paarweisen Auseinander-/ Zusammenfahren der Greifer 5, 6 auf geeignete Weise im Arbeitstakt synchronisiert zu steuern.

Die beschriebene Ausrichtung der Kopfbereiche 3 mittels fördertechnisch stationärer Greifer 5, 6 kann somit relativ einfach und platzsparend zwischen eine Befüllstation 21 und eine Versiegelungsstation 22 zur Schweiß-Versiegelung von Standbodenbeuteln 2 aus flexiblem Folienmaterial integriert werden. Die Ausrichtstation 1 kann hierfür je nach Anzahl der benötigten Verarbeitungsspuren bzw. Förderspuren 4b auf einfache Weise skaliert werden.

## Patentansprüche

1. Verfahren zum Ausrichten von an Standbodenbeuteln (2) ausgebildeten Kopfbereichen (3) für deren anschließende Versiegelung mittels Schweißnaht, wobei die insbesondere heiß mit Produkt (18) gefüllten und kopfseitig offenen Standbodenbeutel zu transporttechnisch stationären Greifern (5, 6) taktweise gefördert werden und die Greifer seitliche Randabschnitte (3a) des jeweiligen Kopfbereichs greifen und so voneinander wegziehen, dass die Vorder- und Rückseiten (3b, 3c) der Kopfbereiche aufeinander zubewegt werden, und wobei anschließend die Vorder- und Rückseiten mittels wenigstens einer mit den Standbodenbeuteln mitlaufenden Fixierleiste (7) für den Weitertransport zur Versiegelung fixiert werden.

2. Verfahren nach Anspruch 1, wobei an den Greifern (5, 6) vorhandene Greiferfinger (9) zum Schließen der Greifer in einer senkrechten und zur dortigen Förderrichtung (4a) der Standbodenbeutel (2) parallelen Ebene (8) mittels eines am jeweiligen Greifer ausgebildeten motorischen Antriebs (10) aufeinander zu bewegt werden.

3. Verfahren nach Anspruch 1 oder 2, wobei die Greifer (5, 6) von oben her greifen und daran vorhandene Greiferfinger (9) zwischen einer geöffneten Stellung (11), in der die Standbodenbeutel (2) unterhalb der Greifer passieren können, und einer geschlossenen Stellung (12), in der sie die Kopfbereiche (3) greifen, taktweise wechseln.

4. Verfahren nach einem der vorigen Ansprüche, wobei die Greifer (5, 6) zum paarweisen Auseinander-/ Zusammenbewegen quer zur dortigen Förderrichtung (4a) der Standbodenbeutel (2) verschoben werden.

5. Verfahren nach einem der vorigen Ansprüche, wobei die Standbodenbeutel (2) in mehreren, insbesondere 6 bis 24 Förderspuren (4b) unter ein jeweils zugeordnetes Paar der Greifer (5, 6) gefördert werden, und wobei nach deren Schließen die bezüglich der Förderspuren linken Greifer (5) mechanisch aneinandergekoppelt und die bezüglich der Förderspuren rechten Greifer (6) mechanisch aneinandergekoppelt jeweils gruppenweise verschoben werden.

6. Verfahren nach einem der vorigen Ansprüche, wobei die Vorder- und Rückseiten (3b ,3c) der Kopfbereiche (3) unterhalb der auseinandergezogenen Greifer (5, 6) von mindestens zwei aufeinander zu beweglichen Fixierleisten (7) bis zur anschließenden Versiegelung abgestützt und/oder zusammengedrückt werden.

7. Verfahren nach einem der vorigen Ansprüche, wobei die Standbodenbeutel (2) aus mehrlagigen Kunststofffolien, insbesondere im Wesentlichen nur aus PP oder PE, bestehen.

8. Verfahren zum Versiegeln mit einem flüssigen, insbesondere erhitzten Produkt (18) gefüllter Standbodenbeutel (2), wobei kopfseitige Befüllöffnungen (2a) der Standbodenbeutel mit dem Verfahren nach wenigstens einem der vorigen Ansprüche zugezogen und in so fixierter Ausrichtung nach taktweisem Weitertransport mittels Folien-Schweißnaht abdichtend versiegelt werden.

9. Ausrichtstation (1) zum Ausrichten von an insbesondere heiß befüllten Standbodenbeuteln (2) ausgebildeten Kopfbereichen (3) für deren anschließende Versiegelung mittels Schweißnaht, umfassend: einen Förderer (4) zum taktweisen Fördern der Standbodenbeutel; oberhalb der Standbodenbeutel transporttechnisch stationär angeordnete Greifer (5, 6); und wenigstens eine mit den Standbodenbeuteln jeweils mitlaufende Fixierleiste (7), wobei die Greifer derart angeordnet und gesteuert sind, dass sie seitliche Randabschnitte (3a) des jeweiligen Kopfbereichs greifen und voneinander wegziehen und dadurch die Vorder- und Rückseiten (3b, 3c) der Kopfbereiche aufeinander zubewegen können, und wobei die Fixierleiste derart beweglich angeordnet und gesteuert ist, dass sie die derart aufeinander zubewegten Vorder- und Rückseiten für den Weitertransport zur Versiegelung fixieren kann.

10. Ausrichtstation nach Anspruch 9, wobei die Greifer (5, 6) jeweils in einer senkrechten und zur Förderrichtung (4a) des Förderers (4) parallelen Ebene (8) bewegliche Greiferfinger (9) und einen diesen zugeordneten motorischen Antrieb (10) aufweisen.

11. Ausrichtstation nach Anspruch 9 oder 10, wobei die Greifer (5, 6) derart beweglich angeordnete und gesteuerte Greiferfinger (9) umfassen und/oder an einem Hubmechanismus derart vertikal beweglich angeordnet sind, dass sie zwischen einer geöffneten Stellung (11), in der die Standbodenbeutel (2) unterhalb der Greifer passieren können, und einer geschlossenen Stellung (12), in der sie die Kopfbereiche (3) greifen, taktweise wechseln.

12. Ausrichtstation nach Anspruch 10 oder 11, wobei die Greiferfinger (9) in vollständig geöffneter Stellung (11) einen Gesamt-Öffnungswinkel (11a) zueinander von wenigstens 90° und insbesondere von wenigstens 150° aufweisen.

13. Ausrichtstation nach einem der Ansprüche 9 bis 12, wobei die Greifer (5, 6) nebeneinander verlaufenden, insbesondere 6 bis 24 Förderspuren (4b) für die Standbodenbeutel (2) jeweils paarweise zugeordnet sind, und ferner umfassend eine erste quer verlaufende Verbindungsstruktur (13) zum gemeinsamen Verschieben der bezüglich der Förderspuren linken Greifer (5) und eine zweite quer verlaufende Verbindungsstruktur (14) zum gemeinsamen Verschieben der bezüglich der Förderspuren rechten Greifer (6).

14. Ausrichtstation nach einem der Ansprüche 9 bis 13, wobei der Förderer (4) den Standbodenbeuteln (7) jeweils paarweise voraus- und nachlaufende Fixierleisten (7) umfasst, die derart beweglich angeordnet und gesteuert sind, dass sie die Vorder- und Rückseiten (3b, 3c) der Kopfbereiche (3) unterhalb der paarweise auseinandergefahrenen Greifer (5, 6) insbesondere bis zur anschließenden Versiegelung abstützen und/oder zusammendrücken.

15. Abfüllanlage (20) für Standbodenbeutel (2), mit: einer Füllstation (21) zum Befüllen, insbesondere Heiß-Befüllen, der Standbodenbeutel mit einem flüssigen Produkt (18); stromabwärts davon die Ausrichtstation (1) nach einem der Ansprüche 9 bis 14; wiederum stromabwärts davon eine Versiegelungsstation (22) zum Herstellen von Kopfsiegelnähten oberhalb der Fixierleisten (7) mittels Folienschweißen; und wenigstens einem sich dazwischen erstreckenden und taktweise angetriebenen Förderer (4) mit Stützgerüsten (17) zur stehenden Aufnahme je eines Standbodenbeutels.
